# EUROPÄISCHE PATENTSCHRIFT

(11) **EP 4 139 078 B1**
(45) Veröffentlichungstag und Bekanntmachung des Hinweises auf die Patenterteilung: **12.06.2024**
(21) Anmeldenummer: 21729399.2
(22) Anmeldetag: 16.03.2021
(51) Int. Cl.: B23K 26/06, B23K 26/082, B23K 26/08, B23K 26/352, B23K 26/362, B23K 26/38, H04W 4/02

(54) **VERFAHREN ZUM BETREIBEN UND STEUERN EINER LASERVORRICHTUNG FÜR DAS GRAVIEREN, MARKIEREN, BESCHRIFTEN UND/ODER SCHNEIDEN EINES VORZUGSWEISEN FLACHEN WERKSTÜCKES**
METHOD FOR OPERATING AND CONTROLLING A LASER DEVICE FOR ENGRAVING, MARKING, INSCRIBING AND/OR CUTTING A PREFERABLY FLAT WORKPIECE
PROCÉDÉ POUR FAIRE FONCTIONNER ET COMMANDER UN DISPOSITIF À LASER CONÇU POUR SOUMETTRE UNE PIÈCE DE PRÉFÉRENCE PLANE À UN PROCESSUS DE GRAVURE, MARQUAGE, ÉCRITURE ET/OU COUPE

(30) Priorität: 24.04.2020 AT 503552020
(43) Veröffentlichungstag der Anmeldung: 01.03.2023
(73) Patentinhaber: Trotec Laser GmbH, 4614 Marchtrenk (AT)
(72) Erfinder: JAUKER, Alexander, 4501 Neuhofen an der Krems (AT)
(86) Internationale Anmeldenummer: PCT/AT2021/060089
(87) Internationale Veröffentlichungsnummer: WO 2021/212158

(56) Entgegenhaltungen:
- EP-A1- 2 169 491
- EP-A1- 3 421 166
- EP-A1- 3 560 725
- EP-B1- 2 169 491
- US-A1- 2012 241 428
- US-A1- 2012 296 461
- US-A1- 2019 224 778

## Beschreibung

Die Erfindung betrifft ein Verfahren zum Betreiben und Steuern einer Laservorrichtung für das Gravieren, Markieren, Beschriften und/oder Schneiden eines vorzugsweiser flachen Werkstückes, bei dem in einem Gehäuse der Laservorrichtung zumindest eine Strahlquellen in Form eines Lasers eingesetzt wird, wobei das Werkstück auf einem Bearbeitungstisch im Bearbeitungsraum des Gehäuses definiert abgelegt wird und ein von der Strahlquelle abgegebener Laserstrahl über Umlenkelemente an zumindest eine Fokussiereinheit gesendet wird, von der der Laserstrahl in Richtung Werkstück abgelenkt und zur Bearbeitung fokussiert wird, wobei die Steuerung, insbesondere die Positionssteuerung des Werkstückes zum Laserstrahl über eine in einer Steuereinheit laufende Steuer-Software, in der ein sogenannter Job abgearbeitet wird, erfolgt, sodass das Werkstück bevorzugt zeilenweise durch Verstellung eines Bewegungssystems, wie eine Schlitten bei einem Laserplotter oder eine Winkelverstellung bei einem Galvo-Markierlaser, bearbeitet wird, wie dies im Anspruch 1 beschrieben ist.

Die EP 3560725 A1 (Basis für den Oberbegriff von Anspruch 1) beschreibt ein Verfahren zum Betreiben und Steuern einer Laservorrichtung zum Markieren, Beschriften und/oder Schneiden eines vorzugsweise flachen Werkstückes, bei dem in einem Gehäuse der Laservorrichtung (2) zumindest eine Strahlquellen in Form eines Lasers eingesetzt wird, wobei das Werkstück auf einem Bearbeitungstisch im Bearbeitungsraum des Gehäuses definiert abgelegt wird und ein von der Strahlquelle abgegebener Laserstrahl über Umlenkelemente an zumindest eine Fokussiereinheit gesendet wird, von der der Laserstrahl in Richtung Werkstück abgelenkt und zur Bearbeitung fokussiert wird, wobei die Steuerung, insbesondere die Positionssteuerung des Werkstückes zum Laserstrahl über eine in einer Steuereinheit laufende Steuer-Software, in der ein sogenannter Job abgearbeitet wird, erfolgt, sodass das Werkstück vorzugsweise zeilenweise bearbeitet wird.

Weiters ist in der US 2012/241428 A1 ein System und Verfahren zum Anpassen von Einstellungen für eine Schweißstromquelle über das Internet beschrieben. Dabei wird der physische Ort, wo sich die Schweißstromquelle befindet, automatisch festgestellt, wodurch eine Vielzahl von Kennungen einer Vielzahl von Schweißstromquelleneinstellungen entsprechend zur Verfügung gestellt wird.

Bei Laservorrichtungen, insbesondere Laserplottern und Galvo-Markierlaser, wird das Laserlicht von einer Laserquelle über Umlenkelemente an ein Fokussiereinheit geleitet, wobei mit einer Fokussierlinse der Laserstrahl scharf gebündelt und in Richtung zu bearbeitendes Werkstück abgelenkt wird. Im Fokus des Laserstrahls entsteht dabei eine extrem hohe Leistungsdichte, mit der Werkstoffe geschmolzen oder verdampft, graviert, markiert oder beschriftet werden können. Dabei erfolgt die Bearbeitung, insbesondere die Gravur, zeilenweise, wozu unterschiedliche Laservorrichtungen bzw. -Systeme verwendet bzw. eingesetzt werden.

Einerseits wird ein Laserplotter eingesetzt, bei dem die Fokussiereinheit auf einen Schlitten montiert ist, der vorzugsweise über einen Riemenantrieb verstellt wird. Die Fokussiereinheit ist ebenfalls am Schlitten verstellbar angeordnet. Damit kann durch Verstellen des Schlittens und der Fokussiereinheit eine Bearbeitungsraum, insbesondere ein Bearbeitungstisch, auf dem das Werkstück aufgelegt wird, vollständig bearbeitet werden.

Andererseits sind Gravo-Markiergeräte bekannt, deren Fokussiereinheit ebenfalls eine Fokussierlinse zum Bündel des Laserstrahls aufweist, wobei die Fokussiereinheit vorzugsweise zentral über den Bearbeitungsraum positioniert ist. Um den gesamten Bearbeitungsraum mit dem gebündelten und fokussierten Laserstrahl bearbeiten zu können, weisen die Gravo-Markiergeräte in der Fokussiereinheit einen verstellbaren Spiegel auf, der den Laserstrahl an jede Position im definierten Bearbeitungsraum ablenken kann.

Der wesentliche Unterschiede dieser beiden Gerätetypen, also eines Laserplotters zu einem Gravo-Markierlaser, liegt somit in der Positions- bzw. Bewegungssteuerung für den Laserstrahl.

Nachteilig ist dabei, dass für jeden Gerätetype ein eigener Job zur Bearbeitung des Werkstückes, in dem die Parameter, wie Beispiels Positions- bzw. Bewegungsdaten für die Erstellung einer Grafik bzw. Text, Fokussierpunkt, Leistung, Werkzeugdicke, Werkzeugmaterial, usw., erstellt werden muss. D.h., wenn eine Grafik oder Text sowohl am Laserplotter als auch mit dem Gravo-Markiergerät auf mehrere Werkstück graviert werden soll, so muss für die Bearbeitung zwei unterschiedliche Jobs, nämlich ein Laserplotter-Job und ein Gravo-Job, erstellt werden, die anschließend in die entsprechenden Gerätetype geladen werden.

Für die Joberstellung werden üblicherweise die Grafiken bzw. Texte auf einer entsprechend Software, wie beispielsweise Corel Draw, Paint, usw. erstellt, die anschließend in die jeweilige Software für den Laserplotter und/oder dem Gravo-Markierlaser importiert werden, worauf in den jeweiligen Softwaren die weiteren Einstellung der Parameter, wie beispielsweise Werkzeugmaterial, Werkzeugdicke, usw. eingestellt werden muss, sodass anschließend ein Job generiert werden kann, der in den jeweiligen Lasertype geladen wird.

Die Aufgabe der Erfindung liegt darin, ein Verfahren zu schaffen, bei dem einerseits die obgenannten Nachteile vermieden werden und andererseits die Bedienerfreundlichkeit wesentlich erhöht wird.

Die Aufgabe wird durch die Erfindung gelöst.

Die Aufgabe der Erfindung wird dadurch gelöst, dass der Job für die Werkstückbearbeitung von einer webbasierten Datenbank bzw. Cloud direkt von der Laservorrichtung bzw. dem Lasergerät oder auch einer Komponente, wie Computer, Laptop, Handy, Tablett, usw., heruntergeladen wird, wobei vor dem Start des Download oder während des Downloads der Standort der Laservorrichtung ermittelt bzw. abgefragt wird, worauf die geltenden Richtlinien der Sicherheitseinstellungen und gegebenenfalls weitere Einstellungen bzw. Parameter zum ermittelten Standort, insbesondere des Landes bzw. der Region, ermittelt werden und die dazugehörigen Parameter, insbesondere sogenannte Sicherheitsparameter, im Job überprüft und gegebenenfalls angepasst werden, wobei die dazugehörigen Parameter "Absaugungsleistung" und/oder "Absaugung mit Filter" und/oder den Parameter "Filtersättigung" beinhalten, wobei die Anpassung des Jobs für die Richtlinien der Sicherheitseinstellung den Parameter "Absaugungsleistung" und/oder "Absaugung mit Filter" und/oder den Parameter "Filtersättigung" beinhaltet. Vorteilhaft ist hierbei, dass durch die automatische Anpassung von Parametern je nach Standort die Job-Erstellung unabhängig von den geltenden Richtlinien der Sicherheitseinstellungen erstellt werden kann. Somit ist es möglich, dass beispielsweise der Job in Österreich für ein Unternehmen in den USA erstellt werden kann, worauf der Job in den USA gedownloadet wird und an die dort geltenden Richtlinien automatisch angepasst wird. Damit ist es nicht mehr erforderlich, dass der Ersteller eines Jobs die geltenden Vorschriften für das Land in dem der Job verarbeitet wird, kennen muss, da diese automatisch beim Download aus der Cloud bzw. webbasierten Datenbank geladen und angepasst wird. Dabei wird beim Start des Jobes zuerst die Einstellung bzw. Konfiguration der Anlage automatisch vom Lasergerät geprüft, ob alle Komponenten vorhanden sind und der Job nach den vorgegebenen und aktualisierten Richtlinien durchgeführt werden kann, d.h., dass beispielsweise beim Start des Jobs bei der Einstellung "Absaugung mit Filter" zuerst geprüft wird, ob ein Filter vorhanden ist oder nicht, und dass bei Nicht-übereinstimmung ein Warnmeldung erscheint und der Job nicht gestartet wird. Diese Warnmeldung kann beispielsweise durch eine berechtigte Person durch spezielle Freigabe, insbesondere durch Eingabe eines Passwortes oder Codes, freigegeben werden, was jedoch vom Lasergerät für die Garantiebestimmungen, da durch unsachgemäße Bearbeitung die Garantie erlischt, gespeichert werden. Hierzu ist es auch möglich, diese manuelle Freigabe in der Cloud zu hinterlegen.

Durch die Maßnahme, dass die Anpassung des Jobs für die Richtlinien der Sicherheitseinstellung den Parameter "Absaugungsleistung" und/oder "Absaugung mit Filter" beinhaltet, wird erreicht, dass dadurch sichergestellt ist, dass ein gefahrloser Betrieb der Anlage bzw. Laser möglich ist. Weiter wird durch die Maßnahmen, dass die Anpassung des Jobs für die Richtlinien der Sicherheitseinstellung den Parameter "Filtersättigung" beinhaltet, wird erreicht, dass eine optimale Einstellung der Anlage an die vorgegebenen Richtlinien erfolgen.

Vorteilhaft sind auch die Maßnahmen, bei denen beim Start des gedownloadeten Jobs an der Laservorrichtung die vorhandene Ausstattung bzw. Komponenten mit dem Parameter für die Sicherheitseinstellungen überprüft wird. Dadurch ist es möglich, dass die Bedienerpersonen kein spezielles Fachwissen aufweisen müssen, da die Anlage bzw. der Laser selbstständig überprüft, ob sämtliche Komponenten vorhanden sind und ob die Parameter entsprechen eingestellt sind, sodass ein richtlinienkonformer Betrieb des Lasergerätes erfolgt.

Es sind die Maßnahmen von Vorteil, bei denen bei Abweichungen der ermittelten Ausstattung bzw. Komponenten mit den vorgegebenen Einstellungen der Parameter ein Warnhinweis ausgegeben wird und der Job nicht gestartet wird. Dadurch wird der Bediener darauf hingewiesen, dass die Anlage nicht Richtlinienkonform arbeitet und er entsprechende Anpassungen vornehmen muss.

Von Vorteil sind die Maßnahmen, bei denen bei vorhandenen Warnhinweis eine Sonderfreigabe einer berechtigten Person erforderlich ist, bei der eine Bestätigung vorzugsweise eine Eingabe eines Codes bzw. Passworts zum Start des Jobs erforderlich ist. Dadurch kann ein dringender Auftrag kurzfristig abgearbeitet werden, wobei jedoch eine entsprechende Dokumentation derartiger Freigaben automatisch vom Lasergerät gespeichert werden.

Es sind die Maßnahmen von Vorteil, bei denen die Freigabe des Jobs trotz Warenhinweis vorzugsweise für die Garantiebestimmungen des Herstellers, dokumentiert und gespeichert wird, wobei vorzugsweise die Speicherung in der Cloud bzw. in der webbasierten Datenbank erfolgt. Dadurch wird erreicht, dass bei auftretenden Problemen mit dem Lasergerät jederzeit nachverfolgt werden kann, ob das Lasergerät entsprechend den Vorgaben betrieben wurde oder nicht.

Vorteilhaft sind auch die Maßnahmen, bei denen zum Erstellen des Job's dieser von einer zentralen Bedienersoftware für unterschiedliche Lasertypen, insbesondere Laserplotter oder Galvo-Markierlaser, zum Gravieren, Markieren, Beschriften und/oder Schneiden eines vorzugsweiser flachen Werkstückes erzeugt wird, wobei in der zentralen Bedienersoftware eine Graphik und/oder Text erstellt oder importiert wird, worauf in der zentralen Bedienersoftware zur Erstellung des Job die Parameter "Materialart, Materialdicke, Gravurtiefe und Effekt" eingestellt werden, worauf von der Bedienersoftware ein Lasertype, - Laserplotter oder Galvo-Markierlaser - vorgeschlagen bzw. ermittelt wird oder vom User der gewünschte Lasertype - Laserplotter oder Galvo-Markierlaser - ausgewählt wird, worauf nach Auswahl des Lasertyps von einem Analysetool die für die Erzeugung der Graphik und/oder Text erforderlichen Bewegungsparameter des ausgewählten Lasertypens ermittelt bzw. berechnet und festlegt und nach Fertigstellung des Job's dieser in einer webbasierten Datenbank bzw. Cloud gespeichert wird. Dadurch wird es erstmals möglich, dass ein Job mit einer Software für die unterschiedlichsten Lasergeräte erstellt werden kann. Der Bediener braucht somit nicht mehr unterschiedliche Softwarekenntnisse für die verschiedenen Gerätetypen, sondern es genügt, wenn er diese eine zentrale Bedienersoftware bedienen kann. Ein wesentlicher Vorteil liegt auch darin, dass jederzeit ein anderes Lasergerät, welches gerade Frei ist, ausgewählt werden kann, da der Job automatisch angepasst wird. Somit muss der Nutzer nicht bereits bei der Erstellung des Job entscheiden, welches Lasergerät er nützt.

Von Vorteil sind die Maßnahmen, bei denen die zentrale Bedienersoftware über ein übergeordnetes Netzwerk, insbesondere in einer Cloud, aufgerufen wird, wobei die zur Verfügung stehenden Lasertypen, insbesondere Lasergeräte, ebenfalls mit der Cloud verbunden werden bzw. sind, wobei vorzugsweise deren Status angezeigt bzw. abgefragt werden kann. Dadurch wird erreicht, dass die Cloud auch für die Bedienersoftware und für die Speicherung und Verwaltung der Jobs verwendet wird.

Vorteilhaft sind auch die Maßnahmen, bei denen die ermittelten Richtlinien für die verschiedenen Standorte, insbesondere Länder bzw. Regionen, in einer webbasierten Datenbank bzw. in der Cloud, gespeichert werden. Dadurch wird erreicht, dass zentral in der Cloud sämtliche erforderliche Informationen weltweit abgerufen und heruntergeladen werden können, wie dies auch für die Jobs und Bedienersoftware der Fall ist.

Es sind auch die Maßnahmen von Vorteil, bei denen der Job von einem oder mehreren Laserplottern gleicher und unterschiedlicher Standorte gleichzeitig geladen und verarbeitet wird. Dadurch ist es möglich, dass bei größeren Stückzahlen diese parallel mit verschiedenen Lasern abgearbeitet werden können.

Vorteilhaft sind die Maßnahmen, bei denen bei Änderung des Jobs an einem Laserplotter diese Änderungen den weiteren diesen Job verarbeitenden Laserplottern zur Verfügung gestellt werden, insbesondere angezeigt werden. Dadurch wird erreicht, dass jeder der den Job verwendet sehen kann, welche Anpassungen zum Optimieren des Jobs jemand vornimmt bzw. durchgeführt hat, sodass er diese ebenfalls übernehmen kann. Dabei ist es möglich, dass den Jobs eine entsprechende Historie hinterlegt und gespeichert ist, um die Änderungen nachverfolgen zu können.

Schließlich sind die Maßnahmen von Vorteil, bei denen beim Verbinden eines Laserplotters mit der webbasierten Datenbank sämtlich diesem Laserplotter betreffenden Einstellungen/Parameter und der Standort automatisch hochgeladen und gespeichert werden. Dadurch wird erreicht, dass von der Bedienersoftware bei Auswahl dieses Lasergeräte genau Parameter festgelegt werden können.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösungen begrenzt ist.

Es zeigen:
- Fig.1: eine schaubildliche Darstellung des Verfahrens für die Erzeugung eines Jobs über eine zentralen Bedienersoftware für unterschiedliche Lasertypen bzw. Lasergeräte, in vereinfachter, schematischer Darstellung;
- Fig. 2: eine schaubildliche Darstellung eines Ablaufes für die Erstellung eines Job von einer zentralen Bedienersoftware für unterschiedliche Lasertypen, in vereinfachter, schematischer Darstellung;
- Fig. 4: eine Bildschirmdarstellung der Bedieneroberfläche, in vereinfachter, schematischer Darstellung ;
- Fig. 5: eine weiter Bildschirmdarstellung der Bedieneroberfläche, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

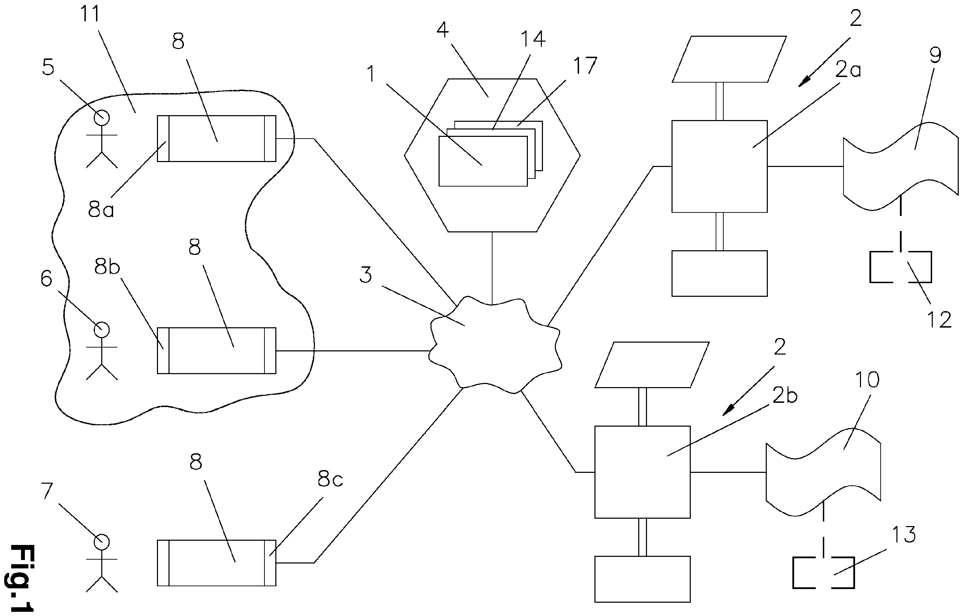

In den Fig. 1 bis 4 ist ein Verfahrensablauf für eine zentrale Bedienersoftware 1 gezeigt, die für unterschiedliche Laservorrichtungen bzw. Lasergeräte 2 eingesetzt wird. Dabei wird die Bedienersoftware 1 einerseits für sogenannte Laserplotter 2a und andererseits für sogenannte Galvo-Markierlaser 2b verwendet.

d.h., dass ein User mit ein und derselben Bedienersoftware 1 einen Jobs für die Bearbeitung eines Werkstückes erstellt und verwendet.

Vorzugsweise ist die Bedienersoftware 1 webbasierend aufgebaut, sodass diese über das Internet 3 in einer Cloud 4 installiert ist. Ein User 5,6,7 kann dabei über einen Webbrowser 8 durch Eingabe der Adresse über das Internet 3 zugreifen, sodass die Bedieneroberfläche der Bedienersoftware 1 im Browser 8 angezeigt wird und entsprechende Eingabe zum Erstellen eines Jobs 9,10 für die unterschiedlichsten Lasergeräte 2, insbesondere Laserplotter 2a und/oder Galvo-Markierlaser 2b, vorgenommen werden können. Bevorzugt hat dabei jeder User 5-7 seinen eigenen Login, sodass eine entsprechende Zuordnung einfach vorgenommen werden kann. Vorteilhaft ist dabei, dass mehrere Hersteller bzw. Firmen 11 ein Firmenlogin bzw. Firmennetzwerk 11 erstellen kann, sodass mehrere User 5,6 einer Firma einzeln oder gleichzeitig auf die zentrale Bedienersoftware 1 zugreifen können und dabei sämtliche zu dieser Firma zugeordnete Laservorrichtungen 2 bzw. Lasergeräte 2 sehen können. Firmenbezogene Lasergeräte 2 sind dabei nicht öffentlich sichtbar, sodass nur User 5,6 dieses Firmennetzwerkes, die eine entsprechende Berechtigung haben, diese Lasergeräte 2 über die zentrale Bedienersoftware 1 sehen und ansprechen können. Selbstverständlich ist es möglich, dass ein berechtigter User 5,6, insbesondere ein Administrator 5, des Firmennetzwerkes 11 eine oder mehrere Lasergeräte 2 öffentlich zugänglich macht, sodass auch von externen User 7 entsprechende Jobs 9, 10 an diese Lasergeräte 2 für eine Auftragsarbeit senden.

Wie nun aus Fig. 1 ersichtlich, verbindet sich ein User 5-7 über den Browser 8, der beispielsweise auf einen Laptop 8a, Computer, Tablett 8b oder Handy 8c geöffnet werden kann, mit dem Internet 3 und in weiterer Folge mit der zentralen Bedienersoftware 1 in der Cloud 4 verbindet. Hier gibt ein User 5-7 eine entsprechende Internetadresse, insbesondere eine sogenannte IP-Adresse, ein, sodass eine Verbindung aufgebaut wird. Anschließend wird im Browser 8 die Bedieneroberfläche der zentralen Bedienersoftware 1 angezeigt. Der User 5-7 kann nunmehr ganz normal die Bedienersoftware 1 nützen, so als wäre diese auf seiner Komponente, also beispielsweise dem Laptop 8a, dem Computer, dem Tablett 8b, oder dem Handy 8c, installiert.

Damit die User 5-7 auch die verfügbaren Lasergeräte 2 über die zentrale Bedienersoftware 1 auswählen können, sind die Lasergeräte 2 mit entsprechenden Komponenten, insbesondere eine Netzwerkkarte, ausgestattet, sodass durch Verbinden eines Lasergerätes 2 mit dem Internet 3 dieses Lasergerät 2 in der Cloud 4, insbesondere der zentralen Bedienersoftware 1, angemeldet und konfiguriert werden kann. Dabei können die Lasergeräte 2 derart konfiguriert werden, dass diese öffentlich sichtbar sind oder nur in dem eigenen Firmennetzwerk 11 sichtbar sind.

Erfindungsgemäß ist nunmehr vorgesehen, dass mit der zentralen Bedienersoftware 1 sämtliche Lasergeräte 2 unterschiedlicher Bauarten, also alle Laserplotter 2a und Galvo-Markierlaser 2b, mit der Bedienersoftware 1 verbunden und auch auswählbar sind. Dabei erstellt die Bedienersoftware 1 sowohl einen Job 9 für einen Laserplotter 2a als auch einen Job 10 für einen Galvo-Markierlaser 2b, wogegen aus dem Stand der Technik hierzu zwei unterschiedliche Softwaren notwendig sind. Damit wird erreicht, dass der User 5-7 nur noch eine Oberfläche bedienen muss, um einen Job 9,10 für einen oder beiden Lasertypen zu erzeugen.

Der vollständigkeitshalber wird erwähnt, dass bei den Lasergeräte in einem Gehäuse zumindest eine Strahlquellen in Form eines Lasers eingesetzt wird, wobei ein Werkstück 12, 13 auf einem Bearbeitungstisch im Bearbeitungsraum des Gehäuses definiert abgelegt wird und ein von der Strahlquelle abgegebener Laserstrahl über Umlenkelemente an zumindest eine Fokussiereinheit gesendet wird, von der der Laserstrahl in Richtung Werkstück abgelenkt und zur Bearbeitung fokussiert wird. Die Steuerung, insbesondere die Positionssteuerung des Werkstückes zum Laserstrahl wird dabei über eine in einer Steuereinheit laufende Steuer-Software, in der der Job 9 oder 10 abgearbeitet wird, erfolgt, sodass das Werkstück bevorzugt zeilenweise durch Verstellung eines Bewegungssystems, wie eine Schlitten bei einem Laserplotter 2a oder eine Winkelverstellung bei einem Galvo-Markierlaser 2b, bearbeitet wird. Die beiden Lasergeräte 2 unterscheiden sich besonders in der Bewegungssteuerung und der verwendeten Fokussierlinse, insbesondere im Strahlendurchmesser.

Diese wesentliche Unterschiede werden dabei bei der Erstellung des Jobs 9,10 von einem Analysetool 14 berücksichtigt.

Damit nunmehr ein Job 9 und/oder 10 erstellt werden kann, muss ein User 5-7 lediglich seine Grafik bzw. Bild oder dem Text erstellen oder importieren und einige wenige Parameter 15 einstellen. Um die Bedienerfreundlichkeit zu erhöhen, braucht der User 5-7 lediglich vier Parameter 15 nämlich

| | |
|---|---|
| 15a | Material des Werkstückes |
| 15b | Dicke des Werkstückes |
| 15c | Effekt für die Gravur bzw. Gravurtiefe |
| 15d | Schneideffekt |

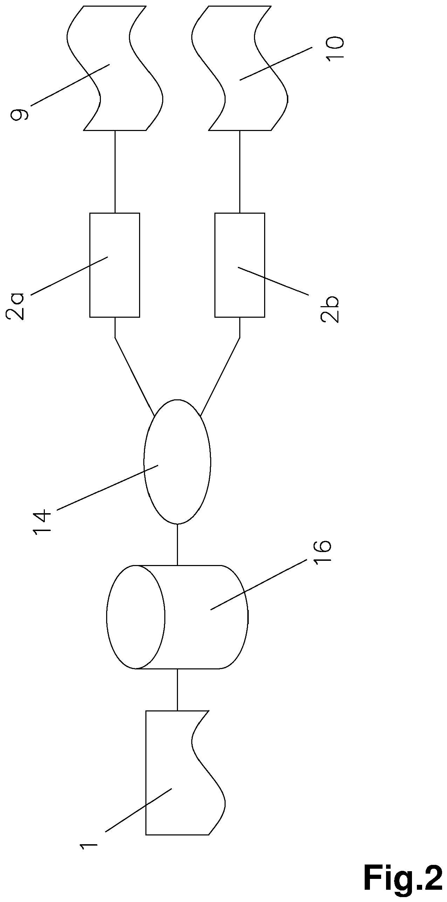

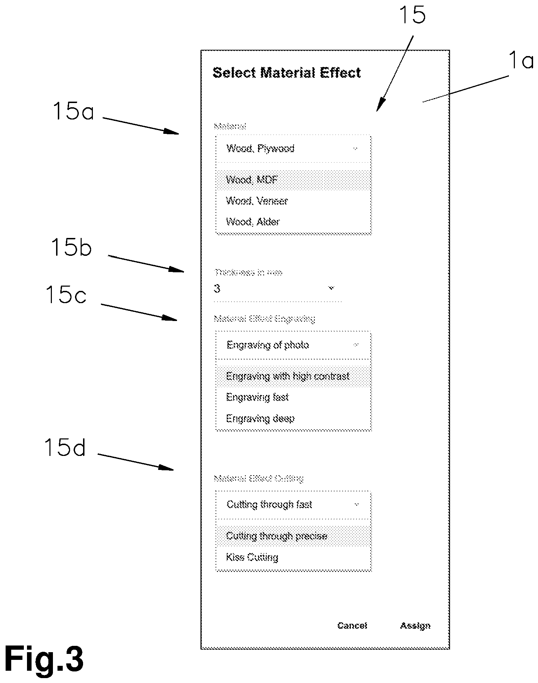

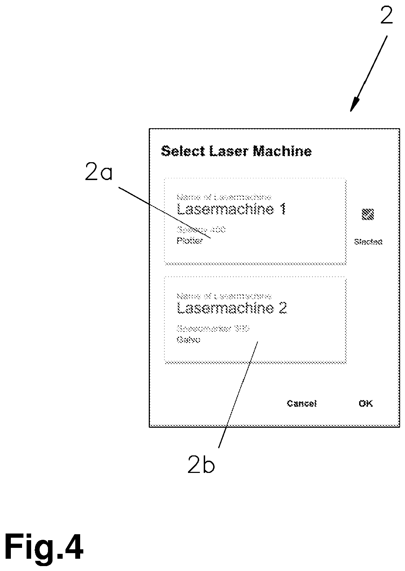

einstellen, wie dies schematisch in Fig. 3 durch Darstellung einer Bildschirmoberfläche der Bedienersoftware. Somit ist es möglich, dass auch ungeschulte oder sogenannte Leien die Einstellung der Parameter 15 vornehmen kann. Hierzu wird vom User 5-7 in der zentralen Bedienersoftware 1 eine Graphik und/oder Text erstellt oder importiert, worauf in der zentralen Bedienersoftware 1 zur Erstellung des Job 9 oder 10 die Parameter "Material 15a, Materialdicke 15b, Gravurtiefe bzw. Effekt 15c und Schneideffekt 15d", eingestellt werden. Anschließend wird Bedienersoftware 1 ein Lasertype, - Laserplotter 2a oder Galvo-Markierlaser 2b - vorgeschlagen bzw. ermittelt oder vom User wird der gewünschte Lasertype - Laserplotter oder Galvo-Markierlaser - ausgewählt, wie dies in Fig. 4 eines Auszuges aus der Bedieneroberfläche 1a ersichtlich ist, worauf nach Auswahl des Lasertyps 2 von dem Analysetool 14 die für die Erzeugung der Graphik und/oder Text erforderlichen Bewegungsparameter des ausgewählten Lasertypens 2 ermittelt bzw. berechnet und festlegt wird, worauf von dem Analysetool 14 die Laserleistung und Geschwindigkeit berechnet und festgelegt wird und der Job 9 oder 10 erstellt wird. Ein derartiger Verfahrensablauf ist in Fig. 2 schematisch dargestellt. Selbstverständlich ist es möglich, dass der User 5-7 die Möglichkeit hat jeden Parameter 15 zu ändern.

Dabei ist es möglich, dass von der Bedienersoftware 1 und/oder vom Analysetool 14 auf eine Datenbank 16, insbesondere Material-Datenbank, zugegriffen wird, in der weitere Parameter 15 für die Bearbeitung der unterschiedlichsten Materialien hinterlegt sind. Weiters können in dieser Datenbank 16 weitere Sicherheitsrelevante Parameter 15 gespeichert sein, die vom Analysetool 14 ebenfalls berücksichtigt werden. Hierzu sind auch maschinenbezogene Daten, wie beispielsweise verwendete Linsen, Filtertype, usw. hinterlegt, die für die Erstellung und Wahl des Lasergerätes 2 wesentlich sind. Selbstverständlich ist es auch möglich, dass derartige maschinenbezogene Daten direkt vom Analysetool 14 über die Internetverbindung von den jeweiligen Lasergeräten 2 online abgefragt werden. Insbesondere wird dies dann verwendet, wenn der User 5-7 ein bestimmtes Lasergerät 2 auswählt, auf dass das Analysetool 14 bei der Erstellung und Berechnung des Jobs 9,10 zugreift und die entsprechenden Daten abfragt. Das Analysetool 14 berücksichtigt unteranderem auch die in den Lasergeräten 2 eingesetzten Linsen und die sich daraus ergebenden Strahldurchmesser, d.h., dass bei Auswahl eines Lasergerätes 2 und zu hoher Auflösung bzw. Qualität, die durch einen zu dicken Strahldurchmesser nicht erreicht werden kann, eine Meldung erscheint, mit dem Hinweis, dass die gewählte Qualität nicht erreicht werden kann oder ein anderes Lasergerät gewählt werden sollte, um die Qualität zu erreichen.

Man kann also sagen, dass der Kunde bzw. User 5-7 alle für die Erstellung eines Werkstückes 13,14 relevanten Arbeitsschritte in der zentralen webbasierten Bedienersoftware 1, mit der er sich über einen Browser 8 verbinden kann, abwickeln kann, wobei keine zusätzlichen Softwarepakete benötigt werden. Durch die Abbildung eines gesamtheitlichen Systems werden Arbeitsschritte auf einander optimiert und Schnittstellen In-Effizienzen gänzlich beseitig. Die Laser-Beschickung mit Prozess und Arbeitsparameters ist von einer einzigen zentralen Anlaufstelle nämlich der Cloud 4 möglich. Hier können Auftragsdaten verwaltete werden und direkt einem jeweiligen Laser bzw. Lasergerät 2 zugewiesen und auch gestartet. Hierzu kann ein Job-Datenbank 17 direkt befüllt werden, in der die erstellten Jobs 9, 10 für alle Lasergeräte 2, also für Laserplotter 2a und Galvo-Markierlaser 2b, gespeichert werden. Dabei ist es auch möglich, dass über verschiedene Attribute Auftragsdaten mitübertragen werden können.

Durch die Integration der Job-Datenbank 17 in der Cloud 4 bzw. durch die Speichermöglichkeit der Jobs 9,10 in der Cloud 4 kann der Job 9,10 für die Werkstückbearbeitung von der webbasierten Datenbank 17 bzw. Cloud 4 direkt von der Laservorrichtung bzw. dem Lasergerät 2 heruntergeladen werden, wobei vor dem Start des Download oder während des Downloads der Standort der Laservorrichtung 2 bzw. des Lasergerätes 2 ermittelt bzw. abgefragt wird, worauf die geltenden Richtlinien der Sicherheitseinstellungen und gegebenenfalls weitere Einstellungen bzw. Parameter zum ermittelten Standort, insbesondere des Landes bzw. der Region, ermittelt werden und die dazugehörigen Parameter, insbesondere sogenannte Sicherheitsparameter, im Job 9,10 überprüft und gegebenenfalls angepasst werden, d.h., dass die Jobs 9, 10 in der Job-Datenbank 17 den einzelnen Lasergeräten 2 zugeteilt wird, die aufeinanderfolgend abgearbeitet werden, wobei diese je nach Verarbeitungsstandort entsprechend an die dort vorgeschrieben Richtlinien angepasst werden. Somit ist es möglich, dass ein automatischer oder manueller Download des Jobs 9,10 durchgeführt werden kann und der User 5-7 keinerlei Anpassungen mehr vornehmen muss.

Vorzugsweise werden die Jobs 9,10 manuell heruntergeladen, da von Bediener des Lasergerätes 2 meist das Werkstück 12,13 in den Bearbeitungsraum des Lasergerätes 2 eingelegt werden muss. Hat der Laser 2 allerdings eine automatische Zufuhrvorrichtung und eine automatische Abfuhrvorrichtung so kann vom Laser die für ihn zugeteilten Jobs 9,10 selbstständig laden und verarbeiten.

Somit ist es möglich, dass der Kunde bzw. User 5-7 die Möglichkeit hat, seine Files, also die Jobs 9.10, überall auf der Welt für den Laser 2 aufzubereiten und danach zum Gerät gehen und diese dann dort abrufen und unmittelbar abarbeiten kann. Durch die automatische Anpassung des Jobs 9,10 an die Vorschriften des Standortes werden alle Richtlinien zur Maschinen-Sicherheit eingehalten.

Damit ist es erstmals möglich, dass unabhängig vom Lasergeräten 2 und Standort in der webbasierten Software 1 bzw. Bedienersoftware 1 Jobs 9,10 erzeugt werden und ohne zusätzliche Anpassungen durch den User 5-7 zwischen allen möglichen Lasermaschinen 2 bzw. Lasergeräten 2 und Standorten ausgetauscht werden können, wobei bei Ändern eines Lasertyps beispielsweise von einem Galvo-Markierlaser 2b auf einen Laserplotter 2a eine Neuberechnung durch das Analysetool 14 zum Anpassen der Bewegungsparameter vorgenommen wird. Ermöglicht wird das durch ein offenes Format der Programmierung namens "MIP". Dies ist eine textbasierte Kommandosprache für Laser 2 in der Metadaten (Anzahl der Instruktionen, Ansteuerung von Peripherie wie zb.: Absaugungen etc.) + Maschinenkommandos enthalten sind. Dabei basiert der Austausch von Jobs 9,10 zwischen unterschiedlichen Maschinentypen, also einem Laserplotter 2a und einem Gravo-Markierlaser 2b, für das Analysetool 14 auf folgenden Aspekten:
- eine zentrale Materialdatenbank 16 ( z.B. der Cloud 4)
- Absolute Parameter und keine Prozentangaben, wie aus dem Stand der Technik üblich
- Eine zentrale Austauschmöglichkeit der Jobs 9, 10 über die Cloud 4
- Eine Intelligenz die Materialparameter zwischen den Geräten 2 transformiert
- Normierung der Geräte 2 zueinander,
- Sowie der Standort für die Richtlinien

Weiters ist es möglich, dass der Kunden bzw. User 5-7 seine eigenen Files, insbesondere selbsterstellte Grafik oder Text oder alte Jobs, in die zentrale webbasierte Bedienersoftware 1 importieren kann. Dabei werden beim Importieren in die Lasersoftware bzw. Bedienersoftware 1 automatisch und ohne weiteres Zutun des User 5-7 für den Laserprozess optimal aufbereitet und mögliche schadhafte Stellen im Hinblick auf den Laserprozess repariert. Der User 5-7muss die Files nicht mehr manuell und zeitintensiv vorbereiten.

Dabei werden importierte Files auf möglich schadhafte Punkte von der Bedienersoftware, insbesondere dem Analysetool, geprüft:
∘ Nicht vollständig geschlossene Kontouren an welchen der Laser ungewollt stoppen würde.
∘ Nicht verbundene Elemente
∘ Überschneidungen von Geometrien
∘ Richtungsänderungen von angrenzenden Elementen
∘ Duplizierungen von identen Elementen werden zu einer einzigen Entität reduziert
∘ Subgrafiken werden zu einer einzigen Grafik reduziert
Dadurch wird erreicht, dass die Maschinenbewegung und Durchlaufzeit wesentlich verkürzt wird.

Man kann also sagen, dass dem Kunden bzw. User 5-7 eine neue Benutzung zur Verfügung gestellt wird, welche auch untrainierten Usern 5-7 die sofortige Benutzung ermöglicht. Laser Einstellungen wie zB. Laserleistung oder Geschwindigkeit werden soweit abstrahiert dass für die Benutzung der Lasermaschine 2 kein explizites technisches Grundverständnis erforderlich ist. Benutzer bzw. User 5-7 müssen nur noch das zu bearbeitende Material, die Materialdicke, Effekt (gewünschte Qualität) und den Schneideffekt auswählen, um sämtliche andere Parameter 15 durch das Analysetool 14 zu ermitteln. Zur Vereinfachung für den User 5-7 können die die Effekte 15c folgende Auswahlpunkte umfassen: "Gravieren von feinen Details", "Gravieren mit hohem Kontrast", "Gravieren von Fotos", "Tiefes Gravieren", "Schnelles Schneiden", "Genaues Schneiden", ...". Auch ist es möglich, dass Farben oder Ebenen, wie aus dem Stand der Technik bekannt, einem gewünschten Materialeffekt zugeordnet werden können.

Die Cloud 4 wird aber auch zum Betreiben und Steuern einer Laservorrichtung 2 für das Gravieren, Markieren, Beschriften und/oder Schneiden eines vorzugsweiser flachen Werkstückes verwendet. Dabei wird der Job 9,10 für die Werkstückbearbeitung von einer webbasierten Datenbank 17 bzw. Cloud 4 direkt von der Laservorrichtung 2 bzw. Lasergerät 1, insbesondere Laserplotter 2a und/oder Galvo-Markierlaser 2b, heruntergeladen, wobei vor dem Start des Download oder während des Downloads der Standort der Lasers ermittelt bzw. abgefragt wird, worauf die geltenden Richtlinien der Sicherheitseinstellungen und gegebenenfalls weitere Einstellungen bzw. Parameter zum ermittelten Standort, insbesondere des Landes bzw. der Region, ermittelt werden und die dazugehörigen Parameter, insbesondere sogenannte Sicherheitsparameter, im Job überprüft und gegebenenfalls angepasst werden, d.h., dass je nach Land bzw. Region der heruntergeladen Job 9,10 an die dort geltende Richtlinien für die Bearbeitung des Werkstückes 12,13 durch einen Laser automatisch angepasst wird, sodass der Benutzer keine Anpassungen mehr durchführen muss. Als vorteilhaft hat sich herausgestellt, dass die ermittelten Richtlinien für die verschiedenen Standorte, insbesondere Länder bzw. Regionen, in einer webbasierten Datenbank 17 bzw. in der Cloud 4, gespeichert werden. Der Ordnung halber sei abschließend darauf hingewiesen, dass zum besseren Verständnis des Aufbaus des Gravurablaufes 1 und deren Komponenten bzw. dessen Bestandteile teilweise unmaßstäblich und/oder vergrößert und/oder verkleinert und vor allem nur schematisch dargestellt wurden.

## Patentansprüche

1. Verfahren zum Betreiben und Steuern einer Laservorrichtung (2) für das Gravieren, Markieren, Beschriften und/oder Schneiden eines vorzugsweisen flachen Werkstückes (9,10), bei dem in einem Gehäuse der Laservorrichtung (2) zumindest eine Strahlquelle in Form eines Lasers eingesetzt wird, wobei das Werkstück auf einem Bearbeitungstisch im Bearbeitungsraum des Gehäuses definiert abgelegt wird und ein von der Strahlquelle abgegebener Laserstrahl über Umlenkelemente an zumindest eine Fokussiereinheit gesendet wird, von der der Laserstrahl in Richtung Werkstück abgelenkt und zur Bearbeitung fokussiert wird, wobei die Steuerung, insbesondere die Positionssteuerung des Werkstückes zum Laserstrahl über eine in einer Steuereinheit laufende Steuer-Software, in der ein sogenannter Job (9,10) abgearbeitet wird, erfolgt, sodass das Werkstück (12,13) bevorzugt zeilenweise durch Verstellung eines Bewegungssystems, wie ein Schlitten bei einem Laserplotter (2a) oder eine Winkelverstellung bei einem Galvo-Markierlaser (2b), bearbeitet wird, **dadurch gekennzeichnet, dass** der Job (9,10) für die Werkstückbearbeitung von einer webbasierten Datenbank (17) bzw. Cloud (4) direkt von der Laservorrichtung (2) bzw. dem Lasergerät (2) heruntergeladen wird, wobei vor dem Start des Downloads oder während des Downloads der Standort der Laservorrichtung (2) ermittelt bzw. abgefragt wird, worauf die geltenden Richtlinien der Sicherheitseinstellungen und gegebenenfalls weitere Einstellungen bzw. Parameter (15) zum ermittelten Standort, insbesondere des Landes bzw. der Region, ermittelt werden und die dazugehörigen Parameter (15), insbesondere sogenannte Sicherheitsparameter, im Job (9,10) überprüft und gegebenenfalls angepasst werden, wobei die dazugehörigen Parameter "Absaugungsleistung" und/oder "Absaugung mit Filter" und/oder den Parameter "Filtersättigung" beinhalten, wobei die Anpassung des Jobs (9,10) für die Richtlinien der Sicherheitseinstellung den Parameter (15) "Absaugungsleistung" und/oder "Absaugung mit Filter" und/oder den Parameter (15) "Filtersättigung" beinhaltet.

2. Verfahren nach Anspruch 1, **dadurch gekennzeichnet, dass** beim Start des gedownloadeten Jobs (9,10) an der Laservorrichtung (2) die vorhandene Ausstattung bzw. Komponenten mit dem Parameter (15) für die Sicherheitseinstellungen überprüft wird.

3. Verfahren nach Anspruch 2, **dadurch gekennzeichnet, dass** bei Abweichungen der ermittelten Ausstattung bzw. Komponenten mit den vorgegebenen Einstellungen der Parameter (15) ein Warnhinweis ausgegeben wird und der Job (9,10) nicht gestartet wird.

4. Verfahren nach Anspruch 3, dass bei vorhandenem Warnhinweis eine Sonderfreigabe einer berechtigten Person erforderlich ist, bei der eine Bestätigung vorzugsweise eine Eingabe eines Codes bzw. Passworts zum Start des Jobs (9,10) erforderlich ist.

5. Verfahren nach Anspruch 4, dass die Freigabe des Jobs (9,10) trotz Warenhinweis vorzugsweise für die Garantiebestimmungen des Herstellers, dokumentiert und gespeichert wird, wobei vorzugsweise die Speicherung in der Cloud (4) bzw. in der webbasierten Datenbank (17) erfolgt.

6. Verfahren nach einem der vorhergehenden Ansprüche, **dadurch gekennzeichnet, dass** zum Erstellen des Job's (9,10) dieser von einer zentralen Bedienersoftware (1) für unterschiedliche Lasertypen (2), insbesondere Laserplotter (2a) oder Galvo-Markierlaser (2b), zum Gravieren, Markieren, Beschriften und/oder Schneiden eines vorzugsweisen flachen Werkstückes (12,13) erzeugt wird, wobei in der zentralen Bedienersoftware (1) eine Graphik und/oder Text erstellt oder importiert wird, worauf in der zentralen Bedienersoftware (1) zur Erstellung des Job (9,10) die Parameter (15) "Materialart (15a), Materialdicke (15b), Gravurtiefe bzw. Effekt für die Gravur (15c) und Schneideffekt (15d)" eingestellt werden, worauf von der Bedienersoftware (1) ein Lasertyp (2), - Laserplotter (2a) oder Galvo-Markierlaser (2b) - vorgeschlagen bzw. ermittelt wird oder vom User der gewünschte Lasertyp (2) - Laserplotter (2a) oder Galvo-Markierlaser (2b) - ausgewählt wird, worauf nach Auswahl des Lasertyps (2) von einem Analysetool (14) die für die Erzeugung der Graphik und/oder Text erforderlichen Bewegungsparameter des ausgewählten Lasertyps (2) ermittelt bzw. berechnet und festlegt und nach Fertigstellung des Jobs (9,10) dieser in einer webbasierten Datenbank (17) bzw. Cloud (4) gespeichert wird.

7. Verfahren nach Anspruch 6 , **dadurch gekennzeichnet, dass** die zentrale Bedienersoftware (1) über ein übergeordnetes Netzwerk, insbesondere in einer Cloud (4), aufgerufen wird, wobei die zur Verfügung stehenden Lasertypen (2), insbesondere Lasergeräte(2), ebenfalls mit der Cloud (4) verbunden werden bzw. sind, wobei vorzugsweise deren Status angezeigt bzw. abgefragt werden kann.

8. Verfahren nach einem der vorhergehenden Ansprüche, **dadurch gekennzeichnet, dass** die ermittelten Richtlinien für die verschiedenen Standorte, insbesondere Länder bzw. Regionen, in einer webbasierten Datenbank (17) bzw. in der Cloud (4), gespeichert werden.

9. Verfahren nach Anspruch 1, **dadurch gekennzeichnet, dass** der Job (9,10) von einem oder mehreren Lasergeräten (2) gleicher und unterschiedlicher Standorte gleichzeitig geladen und verarbeitet wird.

10. Verfahren nach Anspruch 1 oder 2, **dadurch gekennzeichnet, dass** bei Änderung des Jobs (9,10) an einem Lasergerät (2) diese Änderungen den weiteren diesen Job (9,10) verarbeitenden Lasergeräten (2) zur Verfügung gestellt werden, insbesondere angezeigt werden.

11. Verfahren nach einem der vorhergehenden Ansprüche, **dadurch gekennzeichnet, dass** beim Verbinden eines Lasergerätes (2) mit der webbasierten Datenbank (17) oder der Cloud (4) sämtliche diesem Lasergerät (2) betreffenden Einstellungen/Parameter und der Standort automatisch hochgeladen und gespeichert werden.

## Claims

1. Method for operating and controlling a laser device (2) for engraving, marking, lettering and/or cutting a preferably flat workpiece (9,10), in which at least one beam source in the form of a laser is used in a housing of the laser device (2), wherein the workpiece is deposited in a defined manner on a processing table in the processing chamber of the housing and a laser beam emitted by the beam source sent via deflection elements to at least one focusing unit, from which the laser beam is deflected in the direction of the workpiece and focused for processing, wherein the control, in particular the position control of the workpiece relative to the laser beam, takes place via control software running in a control unit, in which a so-called job (9,10) is processed, so that the workpiece (12,13) is preferably processed line by line by adjustment of a movement system, such as a carriage in a laser plotter (2a), or an angular adjustment in a galvo marking laser (2b), **characterized in that** the job (9,10) for the workpiece processing is downloaded from a web-based database (17) or cloud (4), respectively, directly by the laser device (2) or the laser unit (2), respectively, wherein the location of the laser device (2) is determined or queried, respectively, before the start of the download or during the download, whereupon the applicable guidelines for the security settings and, if applicable, further settings or parameters (15), respectively, for the determined location, in particular the country or region, respectively, and the associated parameters (15), in particular so-called safety parameters, are checked in the job (9,10) and adjusted if necessary, wherein the associated parameters include "extraction performance" and/or "extraction with filter" and/or the parameter "filter saturation", wherein the adaptation of the job (9,10) for the guidelines of the safety setting includes the parameter (15) "extraction performance" and/or "extraction with filter" and/or the parameter (15) "filter saturation".

2. Method according to claim 1, **characterized in that** when the downloaded job (9,10) is started, on the laser device (2) the existing equipment or components, respectively, are checked with the parameter (15) for the safety settings.

3. Method according to claim 2, **characterized in that** if the determined equipment or components, respectively, deviate from the predetermined settings of the parameters (15), a warning is issued, and the job (9,10) is not started.

4. Method according to claim 3, [characterized in] that in the presence of a warning a special release by an authorized person is required, in which confirmation is required, preferably by entering a code or password, respectively, to start the job (9,10).

5. Method according to claim 4, [characterized in] that the release of the job (9,10) is documented and stored despite the warning, preferably for the manufacturer's warranty policy, whereby storage preferably takes place in the cloud (4) or in the web-based database (17).

6. Method according to any one of the preceding claims, **characterized in that**, in order to create the job (9,10), the same is generated by a central operator software (1) for various laser types (2), in particular laser plotters (2a) or galvo marking lasers (2b), for engraving, marking, lettering and/or cutting a preferably flat workpiece (12,13), wherein a graphic and/or text is created or imported in the central operator software (1), whereupon the parameters (15) "material type (15a), material thickness (15b), engraving depth or effect for the engraving (15c), respectively, and cutting effect (15d)" are set in the central operator software (1) for creation of the job (9,10), whereupon a laser type (2) - laser plotter (2a) or galvo marking laser (2b) - is suggested or determined by the operator software (1), or the desired laser type (2) - laser plotter (2a) or galvo marking laser (2b) - is selected by the user, whereupon, after selection of the laser type (2), an analysis tool (14) determines or calculates and defines the movement parameters of the selected laser type (2) required for generation of the graphics and/or text, and after completion of the job (9,10) the same is stored in a web-based database (17) or cloud (4), respectively.

7. Method according to claim 6, **characterized in that** the central operator software (1) is invoked via a superordinate network, in particular in a cloud (4), whereby the available laser types (2), in particular laser devices (2), are likewise connected to the cloud (4), whereby their status can preferably be displayed or queried.

8. Method according to any one of the preceding claims, **characterized in that** the determined guidelines for the various locations, in particular countries or regions, respectively, are stored in a web-based database (17) or in the cloud (4).

9. Method according to claim 1, **characterized in that** the job (9,10) is loaded and processed simultaneously by one or several laser devices (2) of the same and different locations.

10. Method according to claim 1 or 2, **characterized in that** when the job (9,10) is changed on one laser device (2), these changes are made available, in particular displayed, to the other laser devices (2) processing this job (9,10).

11. Method according to any one of the preceding claims, **characterized in that** when a laser device (2) is connected to the web-based database (17) or the cloud (4), all settings/parameters relating to this laser device (2) and the location are automatically uploaded and stored.

## Revendications

1. Procédé en vue de l'exploitation et la commande d'un dispositif laser (2) pour la gravure, le marquage, l'étiquetage et/ou la découpe d'une pièce à usiner (9,10) de préférence plate, pour lequel on emploie au moins une source de rayonnement sous la forme d'un laser logé dans un boîtier du dispositif laser (2), la pièce à usiner étant déposée de manière définie sur un plateau de travail dans l'espace de traitement du boîtier, et un faisceau laser émis par la source de rayonnement étant envoyé à au moins une unité de mise au point par le biais d'éléments de déviation, à partir de laquelle le faisceau laser est dévié en direction de la pièce à usiner et mis au point pour le traitement, la commande, notamment la commande de positionnement de la pièce à usiner par rapport au faisceau laser, s'effectuant par l'intermédiaire d'un logiciel de commande fonctionnant dans une unité de commande, dans laquelle une tâche (9,10) est traitée, de sorte que la pièce à usiner (12,13) est traitée de préférence de manière linéaire par le réglage d'un système de déplacement, tel qu'un chariot sur un laser à lit plat (2a) ou un réglage de l'angle sur un système de marquage laser galvo (2b), **caractérisé en ce que** la tâche (9,10) est téléchargée directement par le dispositif laser (2) ou la machine laser (2) à partir d'une base de données (17) en ligne ou un nuage (4) pour le traitement de la pièce à usiner, la localisation du dispositif laser (2) étant déterminée ou interrogée avant le démarrage du téléchargement ou pendant le téléchargement, après quoi les directives en vigueur des paramètres de sécurité et, le cas échéant, d'autres réglages ou paramètres (15) relatifs à la localisation déterminée, notamment du pays ou de la région, sont déterminés et les paramètres (15) associés, notamment les paramètres dits de sécurité sont contrôlés dans la tâche (9,10) et adaptés le cas échéant, les paramètres associés comprenant « Puissance d'extraction » et/ou « Extraction avec filtre » et/ou le paramètre « Saturation du filtre », l'adaptation de la tâche (9,10) pour les directives des paramètres de sécurité comprenant le paramètre (15) « Puissance d'extraction » et/ou « Extraction avec filtre » et/ou le paramètre (15) « Saturation du filtre ».

2. Procédé selon la revendication 1, **caractérisé en ce que**, lors du démarrage de la tâche (9,10) téléchargée sur le dispositif laser (2), l'équipement ou les composants disponibles sont contrôlés avec le paramètre (15) pour les paramètres de sécurité.

3. Procédé selon la revendication 2, **caractérisé en ce que**, en cas de divergences de l'équipement ou des composants déterminés avec les réglages prédéfinis des paramètres (15), un message d'avertissement est affiché et la tâche (9,10) n'est pas démarrée.

4. Procédé selon la revendication 3, **caractérisé en ce qu'**une validation spéciale par une personne dûment autorisée est requise en présence d'un message d'avertissement, pour laquelle une confirmation, de préférence la saisie d'un code ou d'un mot de passe, est requise en vue du démarrage de la tâche (9,10).

5. Procédé selon la revendication 4, **caractérisé en ce que** la validation de la tâche (9,10) en dépit du message d'avertissement est, de préférence, documentée et enregistrée pour les conditions de garantie définies par le fabricant, l'enregistrement étant de préférence effectué dans le nuage (4) ou dans la base de données (17) en ligne.

6. Procédé selon l'une des revendications précédentes, **caractérisé en ce que**, pour la création de la tâche (9,10), celui-ci est généré par un logiciel utilisateur central (1) pour différents types de laser (2), notamment des lasers à lit plat (2a) ou des systèmes de marquage laser galvo (2b), pour la gravure, le marquage, l'étiquetage et/ou la découpe d'une pièce à usiner (12,13) de préférence plate, un graphique et/ou un texte étant créé ou importé dans le logiciel utilisateur central (1), après quoi les paramètres (15) « Type de matériau (15a), Épaisseur du matériau (15b), Profondeur de gravure ou Effet pour la gravure (15c) et Effet de découpe (15d) » sont configurés dans le logiciel utilisateur central (1) pour la création de la tâche (9,10), après quoi un type de laser (2) - laser à lit plat (2a) ou système de marquage laser galvo (2b) - est suggéré ou choisi par le logiciel utilisateur (1), ou le type de laser (2) souhaité - laser à lit plat (2a) ou système de marquage laser galvo (2b) - est sélectionné par l'utilisateur, après quoi, après la sélection du type de laser (2), les paramètres de déplacement du type de laser (2) sélectionné, nécessaires pour la création du graphique et/ou du texte, sont déterminés ou calculés et définis par un outil d'analyse (14), puis enregistrés dans une base de données (17) en ligne ou dans un nuage (4) après l'achèvement de la tâche (9,10).

7. Procédé selon la revendication 6, **caractérisé en ce que** le logiciel utilisateur central (1) est appelé à partir d'un réseau supérieur, notamment dans un nuage (4), les types de laser (2) disponibles, notamment les machines laser (2), seront ou sont également connectés au nuage (4), leur statut étant de préférence affiché ou interrogeable.

8. Procédé selon l'une des revendications précédentes, **caractérisé en ce que** les directives définies pour les différentes localisations, notamment les pays ou régions, sont enregistrées dans une base de données (17) en ligne ou un nuage (4).

9. Procédé selon la revendication 1, **caractérisé en ce que** la tâche (9,10) est chargée et traitée simultanément par une ou plusieurs machines laser (2) implantées dans des localisations identiques ou différentes.

10. Procédé selon la revendication 1 ou 2, **caractérisé en ce que**, en cas de modification de la tâche (9,10) sur une machine laser (2), ces modifications seront mises à la disposition des autres machines laser (2) traitant cette tâche (9,10), et notamment affichées.

11. Procédé selon l'une des revendications précédentes, **caractérisé en ce que**, en cas de connexion d'une machine laser (2) avec une base de données (17) en ligne ou un nuage (4), tous les réglages/paramètres spécifiques à cette machine laser (2) et la localisation sont automatiquement téléversés et enregistrés.
